# EUROPEAN PATENT APPLICATION

(11) **EP 2 085 658 A1**
(43) Date of publication of application: **05.08.2009**
(21) Application number: 08001887.2
(22) Date of filing: 01.02.2008
(51) Int. Cl.: F16H 61/02

(54) **Automatic transmission**

(71) Applicant: GM Global Technology Operations, Inc., Detroit MI 48265-3 (US)
(72) Inventor: Holtz, Vincent, 67560 Rosheim (FR); Tissot, Pascal, 67150 Gerstheim (FR)
(74) Representative: Kraenzmer, Martin

(57) **Abstract**

The invention concerns an automatic transmission with an engine control module and a process for controlling an automatic transmission.

In order to assure secure positive torque requests during lift foot upshifts, an automatic transmission is described which comprises a transmission control module with means for sending an upshift positive torque request on CAN and means for an upshift positive torque supervision preventing the transmission from requesting unexpected positive torque.

The means for an upshift positive torque supervision are designed to differentiate upshift conditions under which the positive torque is not expected to occur from shift conditions where it is expected to occur. They allow secure positive torque requests during lift foot upshifts.

## Description

The invention concerns an automatic transmission with an engine control module and a process for controlling an automatic transmission.

It may be desirable in automatic transmissions to have a "positive torque" request on lift foot upshifts in order to improve shift feeling and responsiveness. However, an upshift positive torque is identified as a "high severity hazard" (or top event) because this function creates a risk of unwanted acceleration of the vehicle, although the driver has lifted his foot from the accelerator.

The document JP 20000320656 A describes a device and a method for controlling a transmission. In order to enable appropriate upshifting according to an operation mode and to improve the driving performance by judging whether a transmission is in a conservative operation mode or a positive operation mode and issuing an upshift signal at an upshift point selected according to the judgment result, this document proposes that a control device receives an input from a driver and issues a shift signal to be sent to actuators of an actuator assembly. In this case, to effectively perform upshifting, the control device reads an upshift point from a memory device, judges whether the transmission is in a conservative mode or a positive operation mode, and issues an upshift signal at the upshift point according to the judgment result. However, this document is not concerned with a positive torque request on lift foot upshifts.

A drive control applicable to a motor vehicle equipped with an engine, a first motor, a second motor, a planetary gear mechanism, a transmission and an accumulator unit is known from the document WO 2006/098249 A1. In response to a decrease in torque transmitted from the second motor to the driveshaft during an upshift operation of the transmission in the state of output of a positive torque from the second motor, the drive control of the invention lowers a target rotation speed of the engine to decrease a torque command of the first motor. This increases a direct torque directly transmitted from the engine to the driveshaft by the first motor. The drive control then increases a torque command of the second motor by a predetermined positive torque and causes to consume at least part of electric power generated by the first motor under the condition of the increasing direct torque. Such control effectively suppresses a decrease in torque applied to the driveshaft, while preventing excessive input of electric power into the accumulator unit. However, this document is not concerned with the problem of a positive torque request on lift foot upshift conditions.

It is the object of the invention to assure secure positive torque requests during lift foot upshifts.

This object is achieved by an automatic transmission which comprises a transmission control module with means for sending an upshift positive torque request on CAN and means for an upshift positive torque supervision preventing the transmission from requesting unexpected positive torque.

The means for an upshift positive torque supervision are designed to differentiate upshift conditions under which the positive torque is not expected to occur from shift conditions where it is expected to occur.

The upshift positive torque request is sent both on CAN where a CAN message is built and on the means for upshift positive torque supervision. If the positive torque is not expected, then a positive torque CAN override request is sent to CAN and the positive torque CAN message to be sent to the engine control module (ECM) is overridden ("no intervention"). In addition, the CAN message override is checked. If the override fails, then the transmission control module (TCM) is forced to reset. Only if the positive torque is expected, a supervised positive torque request is sent to the engine control module.

With other words, there is a hierarchy between the means for sending an upshift positive torque request and the means for an upshift positive torque supervision, the latter being able to override the request of the first.

The device of the invention allows the use of upshift positive torque under lift foot conditions which improves the shift feeling (shift quality) under safe conditions.

In a preferred embodiment of the invention, the positive torque request is supervised by the following criteria:
- maximum upshift time,
- below low speed upshift and
- above low speed upshift.

The invention also concerns a process for controlling an automatic transmission with an engine control module, characterized in that in case a transmission control module sends an upshift positive torque request on CAN, an upshift positive torque supervision is done in order to prevent the transmission from requesting unexpected positive torque.

In this process, an upshift positive torque is only allowed if the result of the supervision is that the positive torque is not unexpected.

In the following, the invention is described in detail with reference to the drawings in which
- FIGURE 1: shows a general overview of the invention,
- FIGURE 2 and: shows the upshift positive torque supervision,
- FIGURES 3a and 3b: show the above low speed upshift supervision.

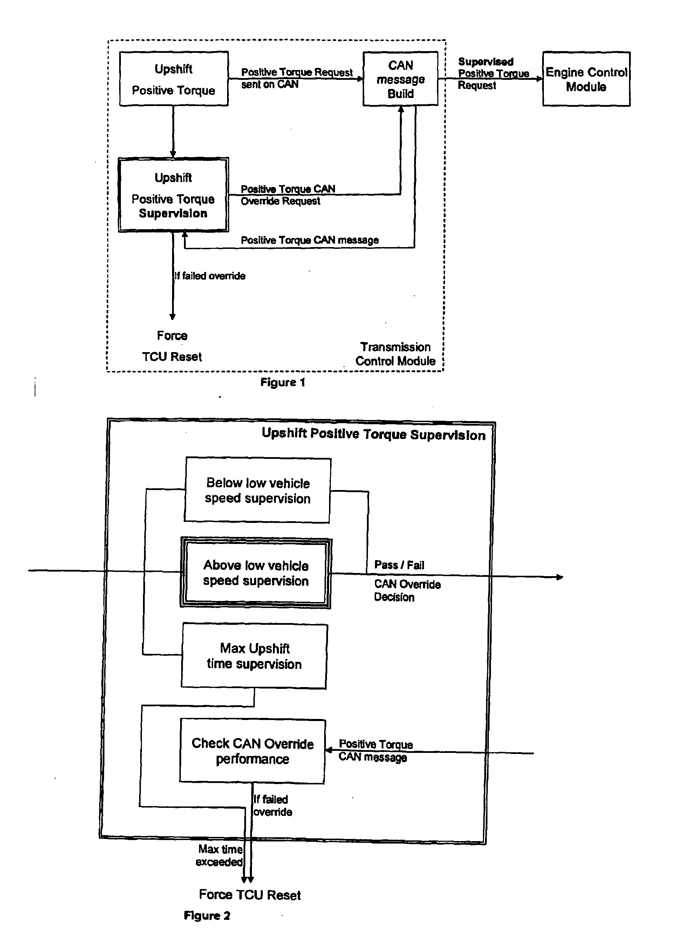

As represented in FIGURE 1, there is a transmission control module (TCM, dotted line) from which a CAN message ("supervised positive torque request") can be sent to an engine control module. In this transmission control module, the following steps occur: During lift foot upshifts, upshift positive torque is requested. The upshift positive torque request is sent both on CAN (where a CAN message is built) and on the means for upshift positive torque supervision. The means for an upshift positive torque supervision are designed to differentiate upshift conditions under which the positive torque is not expected to occur from shift conditions where it is expected to occur. If the upshift positive torque is expected to occur, the supervised positive torque request is sent to the engine control module.

If the positive torque is not expected, then a positive torque CAN override request is sent to CAN and the positive torque CAN message to be sent to the engine control module (ECM) is overridden ("no intervention"). In addition, the CAN message override is checked. If the override fails, then the transmission control module (TCM) is forced to reset ("force TCU reset").

The criteria for the supervision in the means for upshift positive torque supervision are shown schematically in FIGURE 2.

The first criterium of the supervision is the maximum upshift time. In order to detect an unexpected positive torque request (like in steady state or garage shift condition), only a very short time threshold (of e.g. 1 or 2 software loops) is allowed. If time exceeds the maximum time threshold (FIGURE 2, "max time exceeded"), the transmission torque control module is forced to reset (FIGURE 2, "force TCU to reset"). Therefore, a positive torque request is only allowed, until the time threshold is not reached. This threshold generally depends on transmission temperature.

The second criterium is the below low speed upshift which is also shown schematically in FIGURE 2. Below the mimimum output speed (vehicle speed), no positive torque is allowed ("failed", "CAN override decision).

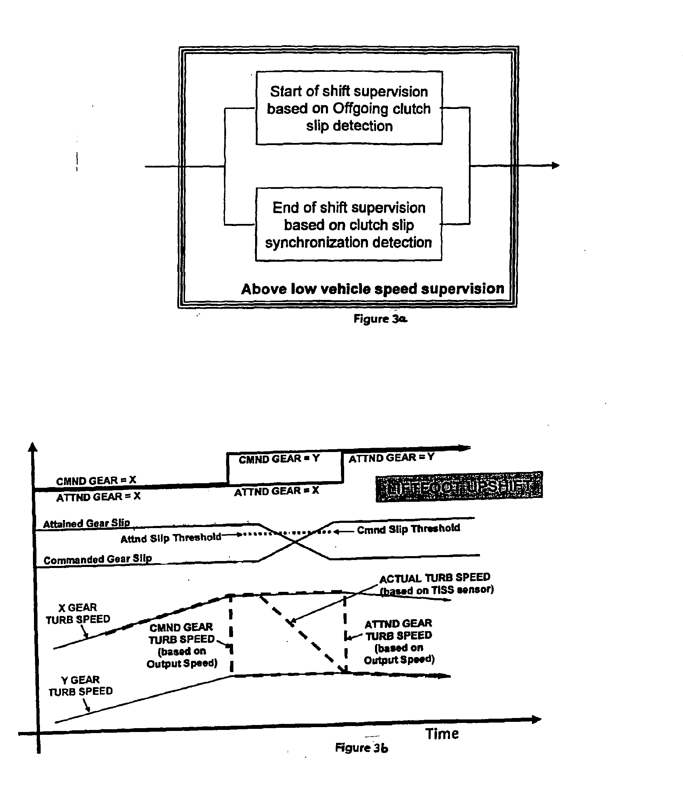

The third criterium is the above low speed upshift during which the "validity" of torque increase request is checked based on the attained gear slip and the commanded gear slip criteria.As shown in FIGURE 3a, both start of shift supervision based on offgoing clutch slip detection as end of shift supervision based on clutch slip synchronisation detection occur during this supervision.

The following formula apply:
attained gear slip = turbine speed - attained gear turbine speed
commanded gear turbine speed = commanded gear turbine speed - turbine speed
   where
attained gear turbine speed = attained gear ratio * output speed
commanded gear turbine speed = commanded gear ratio * output speed

FIGURE 3b shows a schematical time diagram of what happens at lift upshift. As represented in FIGURE 3b, only when the attained slip threshold/commanded slip threshold is passed which correspond to the begin and to the end of gear upshift, the supervision validates the positive torque request. Start of shift supervision uses the attained gear slip time threshold to validate or not the positive torque request and end of shift supervision will use the commanded gear slip time threshold to validate or not the positive torque request.

If the supervision shows that the positive torque request is unexpected, the torque CAN message to be sent to the engine control module is overridden ("no intervention").

In addition, the CAN message override is checked every time. If the override fails, the transmission control module is forced to reset.

## Claims

1. Automatic transmission with an engine control module, **characterized in that** it comprises a transmission control module with means for sending an upshift positive torque request on CAN and means for an upshift positive torque supervision preventing the transmission from requesting unexpected positive torque.

2. Automatic transmission of claim 1, wherein the means for an upshift positive torque supervision are designed to differentiate upshift conditions under which the positive torque is not expected to occur from shift conditions where it is expected to occur.

3. Automatic transmission of claim 2, wherein the positive torque request is supervised by the following criteria:
• maximum upshift time,
• below low speed upshift and
• above low speed upshift.

4. Process for controlling an automatic transmission with an engine control module, **characterized in that** in case a transmission control module sends an upshift positive torque request on CAN, an upshift positive torque supervision is done in order to prevent the transmission from requesting unexpected positive torque.

5. Process according to claim 4, **characterized in that** an upshift positive torque is only allowed if the result of the supervision is that the positive torque is not unexpected.
